Europäisches Patentamt

(19) European Patent Office

Office européen des brevets

(11) Veröffentlichungsnummer: **0 060 995**
**A1**

(12) **EUROPÄISCHE PATENTANMELDUNG**

(21) Anmeldenummer: 82101092.3

(51) Int. Cl.³: **F 16 D 65/60**

(22) Anmeldetag: 15.02.82

(30) Priorität: 20.03.81 DE 3110904

(43) Veröffentlichungstag der Anmeldung:
29.09.82 Patentblatt 82/39

(84) Benannte Vertragsstaaten:
DE FR GB IT SE

(71) Anmelder: Bergische Achsenfabrik Fr. Kotz & Söhne
Am Ohlerhammer
D-5276 Wiehl 1(DE)

(72) Erfinder: Ebbinghaus, Wilfried
Perkenstrasse 42
D-5276 Wiehl(DE)

(72) Erfinder: Uelner, Friedhelm
Im Sonnenwinkel 4
D-5276 Wiehl(DE)

(72) Erfinder: Spangenberg, Eberhard
Dahlienstrasse 12
D-5276 Wiehl(DE)

(74) Vertreter: Patentanwälte Dipl.-Ing. Alex Stenger
Dipl.-Ing. Wolfram Watzke Dipl.-Ing. Heinz J. Ring
Kaiser-Friedrich-Ring 70
D-4000 Düsseldorf 11(DE)

(54) Selbsttätige Nachstellvorrichtung für Fahrzeugbremsen.

(57) Selbsttätige Nachstellvorrichtung für Kraftfahrzeugbremsen mit einem als Bremshebel (5) dienenden Gehäuse, in dem ein aus Schnecke (11) und Schneckenrad bestehendes Nachstellgetriebe angeordnet ist, welches über einen mit der Schneckenwelle (10) mittels einer Einwegkupplung (13, 14, 15) verbundenen Nachstellhebel mit einem feststehenden Teil des Fahrzeuges zusammenarbeitet. Um die Einrichtung für einen das Lüftspiel bestimmenden Freilauf in einem geschlossenen Raum unterzubringen, wird vorgeschlagen, daß der Nachstellhebel als ein das äußere Ende der Schneckenwelle (10) und die Einwegkupplung umschließendes Gehäuse (20, 21) ausgebildet ist, in welchem ein Sekundärteil (15) der Einwegkupplung drehbar gelagert ist, und daß der Freilauf aus einem am Gehäuse (20) befestigten und nach innen in einen Schlitz des Sekundärteiles (15) eingreifenden Bolzen (19) gebildet ist, wobei die Länge des Schlitzes die Größe des Lüftspieles bestimmt.

Fig.4

EP 0 060 995 A1

- 1 -

Selbsttätige Nachstellvorrichtung für Fahrzeugbremsen

---

Die Erfindung betrifft eine selbsttätige Nachstellvorrichtung für Fahrzeugbremsen, insbesondere Kraftfahrzeugbremsen, mit einem als Bremshebel dienenden Gehäuse, in dem ein aus Schnecke und Schneckenrad bestehendes Nachstellgetriebe angeordnet ist, welches über einen mit der Schneckenwelle mittels einer Einwegkupplung verbundenen Nachstellhebel mit einem feststehenden Teil des Fahrzeuges zusammenarbeitet, wobei zwischen dem Nachstellhebel und dem feststehenden Teil ein das Lüftspiel der Bremse bestimmender Freilauf angeordnet ist.

Aus dem DE-GM 66 07 286 ist eine Nachstellvorrichtung der vorstehend beschriebenen Konstruktion bekannt. Bei dieser Nachstellvorrichtung ist der das Lüftspiel der Bremse bestimmende Freilauf zwischen dem Nachstellhebel und dem feststehenden Teil des Fahrzeuges außen freiliegend angeordnet. Damit ist der Nachteil verbunden, daß bei ungünstigen Witterungsverhältnissen der Freilauf zwischen dem Nachstellhebel und dem feststehenden Teil durch Eis, Schnee oder Schmutz mit der Folge verringert wird, daß eine das Lüftspiel der Bremse verringernde Nachstellung erfolgt.

- 2 -

Davon ausgehend liegt der Erfindung die A u f g a b e zugrunde, die bekannte Nachstellvorrichtung so zu verbessern, daß die Einrichtung für den das Lüftspiel bestimmenden Freilauf in einem geschlossenen Raum liegt, damit auch bei ungünstigen Witterungsverhältnissen (Eis, Schnee, Schmutz) eine geregelte, automatische Nachstellung des Bremsbelagverschleißes ohne Reduzierung des Lüftspieles gewährleistet ist.

Zur L ö s u n g dieser Aufgabe wird vorgeschlagen, daß der Nachstellhebel als ein das äußere Ende der Schneckenwelle und die Einwegkupplung umschließendes Gehäuse ausgebildet ist, in welchem ein Sekundärteil der Einwegkupplung drehbar gelagert ist, und daß der Freilauf auf einem am Gehäuse befestigten und nach innen in einen Schlitz des Sekundärteiles eingreifenden Bolzen gebildet ist, wobei die Länge des Schlitzes die Größe des Lüftspieles bestimmt.

Bei einer praktischen Ausführungsform kann das die Nachstellvorrichtung umschließende Gehäuse zweiteilig ausgebildet und mit einem Wälzlager auf dem Sekundärteil der Einwegkupplung gelagert sein.

Bei einer erfindungsgemäß ausgebildeten Nachstellvorrichtung kann der in einem geschlossenen Raum liegende Freilauf für die Aufrechterhaltung des notwendigen Lüftspieles der Bremse nicht mehr durch Vereisungen oder Verkrustungen von Schnee und Schmutz unbeabsichtigt verringert werden. Ein weiterer Vorteil besteht darin, daß die bekannte Nachstellvorrichtung ohne grundlegende Veränderung ihres Konstruktionsprinzips im Sinne der erfindungsgemäßen Lehre umgebaut werden kann.

- 3 -

Weitere Einzelheiten und Vorteile des Gegenstandes der Erfindung ergeben sich aus der nachfolgenden Beschreibung der zugehörigen Zeichnungen, in denen eine bevorzugte Ausführungsform einer erfindungsgemäß ausgebildeten Nachstellvorrichtung in Ansichten und Schnitten dargestellt worden ist. In den Zeichnungen zeigen:

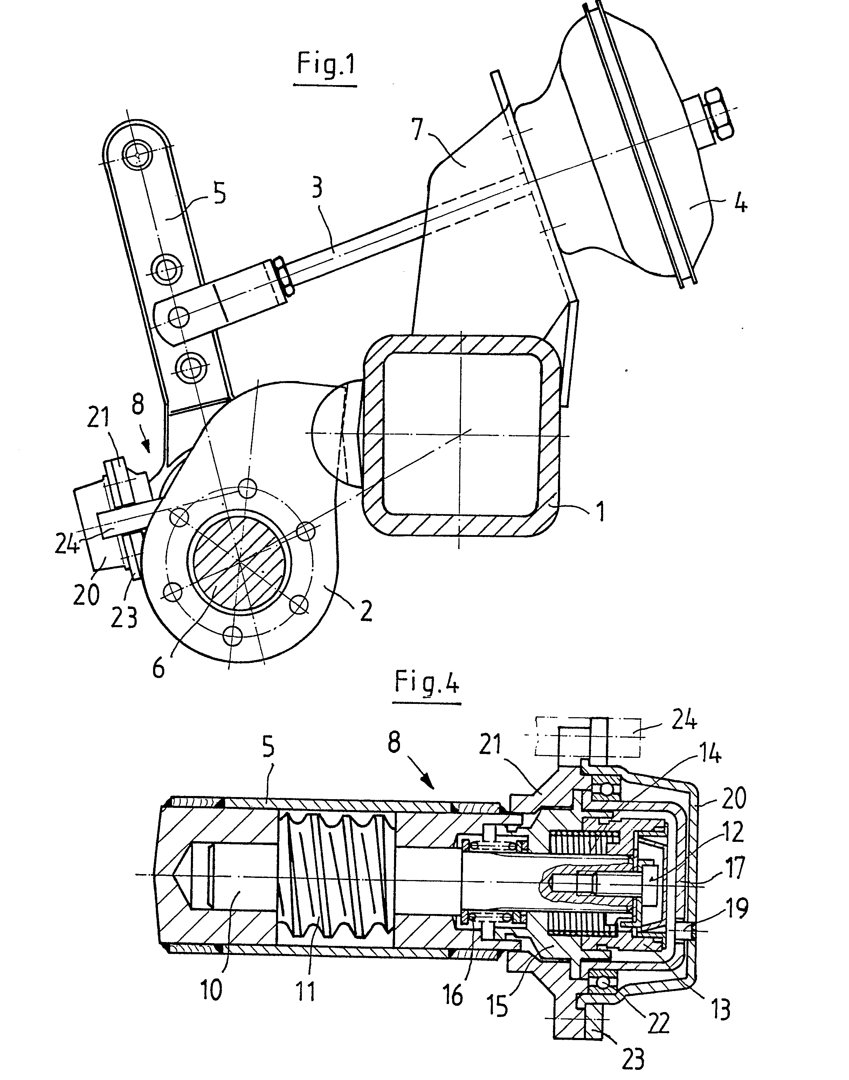

Fig. 1        einen Achskörper mit einer angebauten
              Nachstellvorrichtung in Seitenansicht;

Fig. 2        die Nachstellvorrichtung teilweise geschnitten in Seitenansicht;

Fig. 3        dieselbe Nachstellvorrichtung entlang der
              Linie III-III in Fig. 2 geschnitten;

Fig. 4        dieselbe Nachstellvorrichtung entlang der
              Linie IV-IV in Fig. 2 geschnitten in Draufsicht.

An einem Achskörper 1 ist mit einem Stützlager 2 ein Bremsgestänge angeordnet, welches aus einem, von einer Kolbenstange 3 eines Membranzylinders 4 betätigten Bremshebel 5 und aus einer Bremswelle 6 besteht, auf der einerseits der Bremshebel 5 und andererseits ein Bremsnocken angeordnet sind. Der - nicht dargestellte - Bremsnocken ist zwischen zwei Bremsbacken in der Radbremse angeordnet. Der Membranzylinder 4 kann mit einer Konsole 7 am Achskörper 1 befestigt sein. Die Bremswelle 6 ist außer im Stützlager 2 noch in einem weiteren, am - nicht dargestellten - Bremsschild befestigten Stützlager gelagert. Durch die Bewegung der Kolbenstange 3 kann der Bremsnocken gedreht und damit die Bremsbacken bzw. ihre Bremsbeläge zur Anlage an einer Brems-

- 4 -

trommel gebracht werden.

In dem Bremshebel 5 ist eine Nachstellvorrichtung 8 untergebracht. Diese besitzt ein auf der Bremswelle 6 befestigtes Schneckenrad 9 und eine auf einer Schneckenwelle 10 befestigte Schnecke 11. Auf dem äußeren Ende der Schneckenwelle 10 ist mit einem Schraubbolzen 12 ein Primärteil 13 einer Einwegkupplung befestigt, die aus einer Wendelfeder 14 besteht. Die Wendelfeder 14 liegt mit einer Hälfte ihres äußeren Umfanges dem Primärteil 13 an und mit der anderen Hälfte ihres Umfanges einem Sekundärteil 15. Die Wendelfeder 14 wird mit einer gegen die Schneckenwelle 10 abgestützten Schraubenfeder 16 zwischen den Primär- und Sekundärteilen 13, 15 zusammengeschoben.

Mit dem Sekundärteil 15 ist ein Innentopf 17 verbunden, der in seinem Boden einen Schlitz 18 besitzt. In diesen Schlitz 18 ragt ein Bolzen 19, der in einem Gehäuseteil 20 befestigt ist, welches zusammen mit einem weiteren Gehäuseteil 21 mittels eines Wälzlagers 22 auf dem Innentopf 17 gelagert ist. Das von den beiden Gehäuseteilen 20, 21 gebildete und mit einem Spannring 23 zusammengehaltene Gehäuse wird am äußeren Umfang mit einem ein feststehendes Teil 24 übergreifenden Maul 25 in seiner Lage fixiert.

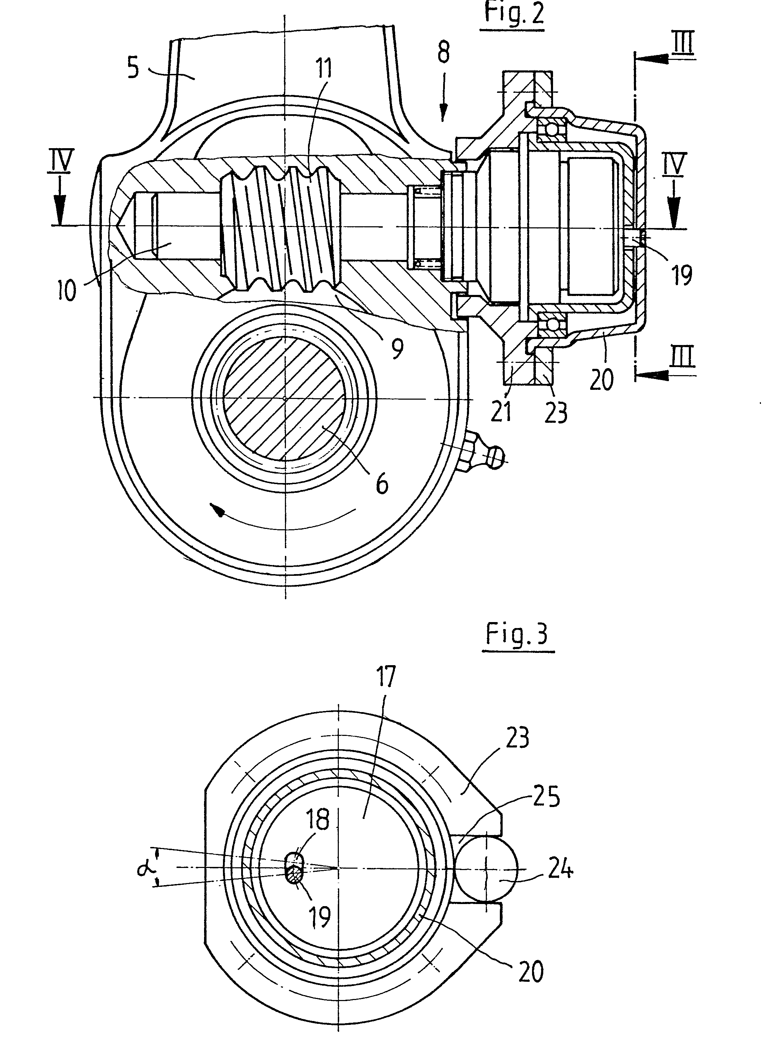

Bei der Betätigung des Bremshebels 5 mit der Kolbenstange 3 des Membranzylinders 4 wird das von den beiden Gehäuseteilen 20, 21 gebildete Gehäuse relativ zur Schneckenwelle 10 um einen geringen Winkelbetrag verschenkt, welcher etwa dem als Winkel $\alpha$ (Fig. 3) dargestellten Lüftspiel der Bremse entspricht. Wenn dieses Lüftspiel durch den Bremsbelagverschleiß zunimmt und nachgestellt werden muß, kommt der Bolzen 19

- 5 -

beim Rückweg nach Entlastung der Bremse am Ende des
Schlitzes 18 zur Anlage und verstellt damit den Sekundärteil 15 relativ zum Primärteil 13 der Einwegkupplung mit
der Folge, daß über die Schneckenwelle 10, die Schnecke
11 und das Schneckenrad 9 eine automatische Nachstellung
der Winkellage des Bremshebels 5 zur Bremswelle 6 erfolgt. Damit wird aber gleichzeitig auch der - nicht
dargestellte - Bremsnocken in der Bremse nachgestellt,
um den eingetretenen Bremsbelagverschleiß wieder auszugleichen und das Lüftspiel konstant zu halten.

Alle in der Beschreibung erwähnten und in den Zeichnungen dargestellten neuen Merkmale sind erfindungswesentlich, auch soweit sie in den Ansprüchen nicht ausdrücklich beansprucht worden sind.

- 6 -

Bezugszeichenliste:

| 1 | Achskörper |
|---|---|
| 2 | Stützlager |
| 3 | Kolbenstange |
| 4 | Membranzylinder |
| 5 | Bremshebel |
| 6 | Bremswelle |
| 7 | Konsole |
| 8 | Nachstellvorrichtung |
| 9 | Schneckenrad |
| 10 | Schneckenwelle |
| 11 | Schnecke |
| 12 | Schraubbolzen |
| 13 | Primärteil |
| 14 | Wendelfeder |
| 15 | Sekundärteil |
| 16 | Schraubenfeder |
| 17 | Innentopf |
| 18 | Schlitz |
| 19 | Bolzen |
| 20 | Gehäuseteil |
| 21 | Gehäuseteil |
| 22 | Wälzlager |
| 23 | Spannring |
| 24 | Teil |
| 25 | Maul |

- 7 -

<u>A n s p r ü c h e</u>

1. Selbsttätige Nachstellvorrichtung für Fahrzeugbremsen, insbesondere Kraftfahrzeugbremsen, mit einem als Bremshebel dienenden Gehäuse, in dem ein aus Schnecke und Schneckenrad bestehendes Nachstellgetriebe angeordnet ist, welches über einen mit der Schneckenwelle mittels einer Einwegkupplung verbundenen Nachstellhebel mit einem feststehenden Teil des Fahrzeuges zusammenarbeitet, wobei zwischen dem Nachstellhebel und dem feststehenden Teil ein das Lüftspiel der Bremse bestimmender Freilauf angeordnet ist, d a d u r c h   g e k e n n z e i c h n e t , daß der Nachstellhebel als ein das äußere Ende der Schneckenwelle (10) und die Einwegkupplung umschließendes Gehäuse (20, 21) ausgebildet ist, in welchem ein Sekundärteil (15) der Einwegkupplung drehbar gelagert ist, und daß der Freilauf aus einem am Gehäuse (20, 21) befestigten und nach innen in einen Schlitz (18) des Sekundärteiles (15) eingreifenden Bolzen (19) gebildet ist, wobei die Länge des Schlitzes (18) die Größe des Lüftspieles bestimmt.

2. Nachstellvorrichtung nach Anspruch 1, dadurch gekennzeichnet, daß das Gehäuse (20, 21) zweiteilig ausgebildet und mit einem Wälzlager (22) auf dem Sekundärteil (15) gelagert ist.

St/ro

0060995

1/2

Fig.1

Fig.4

Fig.2

5 11 8 III

IV

10 9

6

21 23 20 19

III

Fig.3

17

23

25

18 24

α

19 20

**0060995**

Nummer der Anmeldung

# EUROPÄISCHER RECHERCHENBERICHT

Europäisches Patentamt

EP 82 10 1092.3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE – A – 2 008 139 (WESTINGHOUSE)<br>* Fig. 1 bis 6 *<br>& US – A – 3 724 607<br>–– | 1 |
| A | DE – A – 1 917 328 (KNORR–BREMSE)<br>* Fig. 1 bis 4 *<br>–– | 1 |
| D,A | DE – U – 6 607 286 (WESTINGHOUSE)<br>–––– | |

**KLASSIFIKATION DER ANMELDUNG (Int. Cl.³)**

F 16 D 65/60

**RECHERCHIERTE SACHGEBIETE (Int. Cl.³)**

F 16 D 65/00

**KATEGORIE DER GENANNTEN DOKUMENTE**

X von besonderer Bedeutung allein betrachtet
Y von besonderer Bedeutung in Verbindung mit einer anderen Veröffentlichung derselben Kategorie
A technologischer Hintergrund
O nichtschriftliche Offenbarung
P Zwischenliteratur
T der Erfindung zugrunde liegende Theorien oder Grundsätze
E älteres Patentdokument, das jedoch erst am oder nach dem Anmeldedatum veröffentlicht worden ist
D in der Anmeldung angeführtes Dokument
L aus andern Gründen angeführtes Dokument

&. Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 14-05-1982 | LUDWIG |

EPA form 1503.1   06.78